# EUROPÄISCHE PATENTSCHRIFT

(11) **EP 1 588 118 B1**
(45) Veröffentlichungstag und Bekanntmachung des Hinweises auf die Patenterteilung: **13.09.2006**
(21) Anmeldenummer: 03799493.6
(22) Anmeldetag: 19.12.2003
(51) Int. Cl.: G01B 5/012, G01B 21/04, B23Q 3/155, B25J 15/04, B23Q 35/24

(54) **TASTKOPF FÜR EIN KOORDINATENMESSGERÄT**
PROBE FOR A COORDINATE MEASURING DEVICE
TETE PALPEUSE D'UN APPAREIL DE MESURE DES COORDONNEES

(30) Priorität: 31.01.2003 DE 10304827; 25.03.2003 DE 10314304
(43) Veröffentlichungstag der Anmeldung: 26.10.2005
(73) Patentinhaber: Carl Zeiss Industrielle Messtechnik GmbH, 73447 Oberkochen (DE)
(72) Erfinder: ROTH, Roland, 73550 Waldstetten (DE); DOMINICUS, Walter, 89551 Königsbronn (DE); STRAUSS, Wolfgang, 89195 Staig (DE); SEITZ, Karl, 73447 Oberkochen (DE)
(74) Vertreter: Duhme, Torsten
(86) Internationale Anmeldenummer: PCT/EP2003/014584
(87) Internationale Veröffentlichungsnummer: WO 2004/068068

(56) Entgegenhaltungen:
- EP-A- 0 293 036
- DE-A- 10 108 774
- US-A- 3 171 663
- US-A- 4 510 693
- US-A1- 2002 174 556

## Beschreibung

Die vorliegende Erfindung betrifft einen Tastkopf für ein Koordinatenmessgerät, mit einem Tastsystem, das ein membranartiges Sensorsystem mit Sensorelementen sowie einen Taststift aufweist, der an dem Sensorsystem angeordnet ist, wobei das membranartige Sensorsystem auf Siliziumbasis aufgebaut ist und in einer vorbestimmten Weise ausgelenkt wird, wenn auf den Taststift eine Kraft einwirkt, wobei die Sensorelemente dazu ausgebildet sind, eine Auslenkung des Sensorsystems zu erfassen, und wobei der Taststift und das membranartige Sensorsystem mit den Sensorelementen eine bauliche Einheit bilden.

Ein Tastkopf der vorstehend genannten Art ist aus der DE 101 08 774 A1 bekannt.

Bei Koordinatenmessgeräten ist es in der Praxis häufig erforderlich, den Taststift auszuwechseln, damit nacheinander verschiedenartige Messaufgaben durchgeführt werden können. Hierzu zählen beispielsweise das Ausmessen von unterschiedlich tiefen Bohrungen, von Bohrungen mit unterschiedlichem Innendurchmesser und dergleichen, wobei in diesen Fällen jeweils Taststifte unterschiedlicher Länge sowie an deren freiem Ende angeordnete Tastkugeln unterschiedlichen Durchmessers erforderlich sind.

In diesem Zusammenhang werden zukünftig miniaturisierte Anordnungen eingesetzt, bei denen ein Taststift von typischerweise 5 bis 15 mm Länge Teil eines membranartigen Sensorsystems ist. Wenn der Taststift durch eine Kraft in Achsrichtung oder quer dazu ausgelenkt wird, führt dies zu einer kontrollierten Auslenkung, d.h. Verbiegung der Membrananordnung. Diese kontrollierte Auslenkung wird über Sensorelemente erfasst, deren Ausgangssignal in die reale Auslenkung des Taststiftes bzw. der daran befestigten Tastkugel umgerechnet werden kann.

Bei einer derartigen Anordnung, wie sie in der eingangs genannten DE 101 08 774 A1 beschrieben ist, wird eine membranartige Anordnung verwendet, die in der Draufsicht quadratisch ist und einen verdickten, umlaufenden Rand aufweist. In der Mitte der Anordnung befindet sich eine weitere Verdickung, die den Taststift mit Tastkugel trägt. Zwischen dem Rand und der Mitte befindet sich eine membranartige Zone, die auf der vom Taststift abgewandten Seite mit piezoresistiven Elementen bzw. mit Dehnungsmessstreifen versehen ist. Eine Auslenkung des Taststiftes führt hier zu einer Verwindung der membranartigen Zone und damit zu einer Signalgabe durch die piezoresistiven Elemente bzw. die Dehnungsmessstreifen. Einzelheiten hinsichtlich der Signalabnahme sowie der Montage dieses membranartigen Sensorsystems sind dabei nicht angegeben.

Aus US 4,510,693 ist ein schaltender Tastkopf bekannt, der an Stelle eines Bearbeitungswerkzeugs in die Spindel einer Werkzeugmaschine eingesetzt werden kann. Der Taststift sitzt bei diesem bekannten Tastkopf an einer Platte, die bei Auslenkungen des Taststiftes von zumindest einem ihrer Auflagekontakte gehoben wird. Mit einem solchen schaltenden Tastkopf ist nur eine Feststellung möglich, ob der Taststift um eine bestimmte Strecke bzw. einen bestimmten Winkel ausgelenkt wurde. Die Größe der Auslenkung kann jedoch nicht gemessen werden.

Aus US 2002/0174556 A1 ist ein Tastkopf bekannt, bei dem der Taststift über zwei parallele *diaphragms* gelagert ist. Die *diaphragms* ermöglichen eine Auslenkung des Taststiftes relativ zum Gehäuse des Tastkopfes. Die Größe der Auslenkung wird mit Hilfe eines optischen Systems bestimmt.

Die beiden zuletzt genannten Tastköpfe sind im Hinblick auf ihre physikalischen Abmessungen und die verwendeten Materialien "herkömmliche" Tastköpfe. Es handelt sich nicht um miniaturisierte Tastköpfe mit einem membranartigen Sensorsystem auf Siliziumbasis.

Der Erfindung liegt die Aufgabe zugrunde, einen Tastkopf der eingangs genannten Art anzugeben, der ein Auswechseln des empfindlichen Tastsystems in reproduzierbarer und zerstörungsfreier Weise ermöglicht.

Insbesondere soll es möglich werden, das Auswechseln eines Tastsystems auch automatisieren zu können, insbesondere mit Hilfe eines CNC-gesteuerten Koordinatenmessgerätes.

Gemäß einem Aspekt der Erfindung wird diese Aufgabe durch einen Tastkopf der eingangs genannten Art gelöst, mit einem Tastkopfhalter, mit dem die bauliche Einheit fest verbunden ist, wobei der Tastkopfhalter auswechselbar mit einer Tastkopfaufnahme des Koordinatenmessgerätes verbindbar ist, um die bauliche Einheit auswechselbar an der Tastkopfaufnahme zu befestigen.

Es wird also ein größeres und damit einfacher handhabbares Element gebildet, nämlich der Tastkopfhalter, der mit der baulichen Einheit verbunden ist. Ein Tastkopfhalter lässt sich dann leichter handhaben, ohne dass die Gefahr besteht, dass insbesondere der Taststift bereits bei geringfügiger Unachtsamkeit abbricht.

Bevorzugt ist es dabei, eine bauliche Trennung zwischen mechanischer Befestigung einerseits und elektrischem Anschluss andererseits vorzusehen. So ist es beispielsweise möglich, die bauliche Einheit zunächst mechanisch zu befestigen und erst dann elektrisch anzuschließen, oder der elektrische Anschluss vollzieht sich von selbst, wenn die mechanische Befestigung abgeschlossen ist.

Bei einer bevorzugten Weiterbildung des erfindungsgemäßen Tastkopfes ist der Tastkopfhalter hülsenartig ausgebildet.

Diese Maßnahme hat den Vorteil, dass der Tastkopfhalter in einfacher Weise ergriffen und z.B. durch Aufschieben auf oder Einschieben in ein entsprechendes Gegenstück in einfacher Weise fixiert werden kann.

Weiterhin ist bevorzugt, wenn ein hinterer Abschnitt des Tastkopfhalters mit einer Tastkopfaufnahme des Koordinatenmessgerätes verbindbar ist.

Diese Maßnahme hat den Vorteil, dass die Schnittstelle aus Tastkopfhalter und Tastkopfaufnahme für den jeweiligen Einsatzfall individuell optimiert werden kann.

Dies gilt insbesondere dann, wenn gemäß einer Weiterbildung dieser Variante der hintere Abschnitt über eine konische Passung mit der Tastkopfaufnahme verbindbar ist.

Diese Maßnahme hat den Vorteil, dass hinsichtlich des Tastkopfhalters und der Tastkopfaufnahme eine perfekte Gleichachsigkeit erzielt werden kann.

Bei einer weiteren bevorzugten Ausführungsform der Erfindung ist das Sensorsystem an einem vorderen Abschnitt des Tastkopfhalters befestigt.

Diese Maßnahme hat den Vorteil, dass das Sensorsystem in optimaler Weise frei liegt.

Weiterhin ist eine Ausführungsform der Erfindung bevorzugt, bei der der Tastkopfhalter in einer gegenüber einer Achse der Tastkopfaufnahme definierten Drehstellung mit der Tastkopfaufnahme verbindbar ist.

Auch diese Maßnahme hat den Vorteil, dass eine hohe Reproduzierbarkeit des Messergebnisses erreicht wird. Ferner ist von Vorteil, dass bei einer auch in Drehrichtung definierten Position des Tastkopfhalters und damit der aus dem membranartigen Sensorsystem und dem miniaturisierten Taststift bestehenden baulichen Einheit das Sensorsystem in vollkommen definierter Lage eingebaut ist, so dass eine elektrische Kontaktierung des Sensorsystems in reproduzierbarer Weise möglich ist.

Gemäß einer Weiterbildung der genannten Variante der Erfindung ist zum Definieren der Drehstellung eine Kugel vorgesehen, die in der definierten Drehstellung in eine Nut der Tastkopfaufnahme oder in eine Bohrung an dem Tastkopfhalter einfällt.

Diese Maßnahme hat den Vorteil, dass bei einfacher Montage ein zuverlässiges Erreichen und Einhalten der definierten Drehstellung möglich ist, wenn die Kugel in die Bohrung eingefallen ist.

Bei weiteren bevorzugten Ausführungsformen der Erfindung erstreckt sich die Tastkopfaufnahme entlang einer Achse, und der Tastkopfhalter ist mit einem vorderen Endabschnitt der Tastkopfaufnahme verbindbar.

Diese Maßnahme hat den Vorteil, dass eine streng axiale Bauweise möglich ist, wie sie insbesondere im Zusammenhang mit Pinolen von Koordinatenmessgeräten in Portalbauweise oder in Freiarmbauweise einsetzbar ist.

Bei weiteren bevorzugten Ausführungsformen der Erfindung ist das Sensorsystem an einer radialen Rückseite des Tastkopfhalters befestigt.

Diese Maßnahme hat den Vorteil, dass das Sensorsystem weitgehend geschützt untergebracht ist. Ferner besitzt das Sensorsystem auf diese Weise ein axiales Widerlager, so dass das Sensorsystem von seiner Rückseite her angefahren werden kann, beispielsweise zum Zwecke des elektrischen Kontaktierens.

Nach einem weiteren Ausführungsbeispiel der Erfindung ist das Sensorsystem mit dem Tastkopfhalter verklebt.

Diese Maßnahme hat den Vorteil, dass die mit dem Tastkopfhalter gebildete Einheit in einfacher Weise vorgefertigt werden kann, wobei durch das Verkleben eine dauerhafte Verbindung zwischen Sensorsystem und Tastkopfhalter hergestellt wird.

Gemäß einer Variante der beiden vorgenannten Ausführungsbeispiele kann das Sensorsystem mit der Rückseite des Tastkopfhalters verklebt sein, zu welchem Zwecke bevorzugt Klebetaschen zur Aufnahme von Klebstoff im Bereich der Rückseite vorgesehen sind.

Diese Maßnahmen haben den Vorteil, dass eine einfache mechanische Vorfertigung möglich ist, die zu einem stabilen Gebilde führt.

Bei den vorgenannten Ausführungsbeispielen ist weiter bevorzugt, wenn der Taststift durch eine zentrale Öffnung in der Rückseite ragt.

Diese Maßnahme hat den Vorteil, dass die mechanische Kapselung des Sensorsystems so weit wie möglich realisiert werden kann, wobei nur diejenigen Teile frei liegen, die aus mechanischen Gründen frei liegen müssen.

Bei einer weiteren Gruppe von Ausführungsbeispielen ist das Sensorsystem auf seiner vom Taststift abgewandten Rückseite für eine Erfassung seiner Auslenkung zugänglich.

Diese an sich bekannte Maßnahme hat den Vorteil, dass die gesamte Messwerterfassung im gekapselten Bereich des Tastkopfes stattfinden kann und damit die eigentliche Messung an dem Taststift nicht behindert wird.

Wenn in an sich ebenfalls bekannter Weise das Sensorsystem elektrische Sensorelemente zum Erfassen der Auslenkung aufweist, ist weiter besonders bevorzugt, wenn die Sensorelemente im genannten Sinne von der Rückseite her kontaktierbar sind.

Dies geschieht gemäß einer bevorzugten Weiterbildung der Erfindung dadurch, dass zum Kontaktieren der Sensorelemente Federstifte vorgesehen sind.

Diese Maßnahme hat den wesentlichen Vorteil, dass der Kontakt zu den Sensorelementen selbsttätig hergestellt werden kann, wenn der Tastkopfhalter mit dem daran befestigten Sensorsystem am Tastkopf befestigt wird. Durch entsprechende Auslegung der Federstifte kann dabei die Kontaktkraft in gewünschter Weise eingestellt werden. Die federnde Anlage der Federstifte hat darüber hinaus den Vorteil, dass in Achsrichtung der Federstifte vorhandene Passungsfehler kompensiert werden können.

Bei dieser Variante der Erfindung ist weiter bevorzugt, wenn eine Mehrzahl von Federstiften in einem Federstifthalter gehalten ist.

Diese Maßnahme hat den Vorteil, dass eine Vielzahl von elektrischen Kontakten gleichzeitig mit einem einzigen gemeinsamen Bauelement, nämlich dem Federstifthalter, hergestellt werden kann.

Hierzu ist der Federstifthalter bevorzugt in dem vorderen Endabschnitt der Tastkopfaufnahme befestigt. Dies geschieht bevorzugt dadurch, dass der Tastkopfhalter auf den vorderen Endabschnitt aufgeschoben und der Federstifthalter in den vorderen Endabschnitt eingesteckt ist.

Wenn dann in weiterer Ausbildung der Erfindung der Tastkopfhalter mit dem Endabschnitt verschraubbar ist, vorzugsweise mittels einer Überwurfmutter, so ist es insgesamt mit wenigen Handgriffen möglich, den erfindungsgemäßen Tastkopf mit allen im vorliegenden Zusammenhang interessierenden Elementen zu montieren.

Bei dieser Gruppe von Ausführungsbeispielen ist weiter bevorzugt, wenn der Federstifthalter in einer vorbestimmten Drehstellung relativ zu einer Achse des Tastkopfhalters befestigbar ist.

Diese Maßnahme hat den bereits weiter oben abgehandelten Vorteil, dass durch die vollständige Definition der Position der Elemente eine genaue Kontaktierung möglich ist, auch wenn eine Vielzahl von Sensorelementen kontaktiert werden muss.

Obwohl im Rahmen der vorliegenden Erfindung Sensorsysteme unterschiedlichster Art eingesetzt werden können, ist doch bevorzugt, ein an sich bekanntes Sensorsystem einzusetzen, das einen verdickten Rand aufweist, wobei der Taststift in einer Mitte des Sensorsystems angeordnet ist und sich zwischen dem Rand und der Mitte ein Membranbereich befindet.

Bei der vorgenannten Art von Sensorsystemen kann der Membranbereich in der Draufsicht mehreckig-, vorzugsweise rechteckigrahmenförmig, insbesondere quadratisch-rahmenförmig ausgebildet sein.

Besonders bevorzugt ist jedoch, wenn der Membranbereich in der Draufsicht kreisringförmig ausgebildet ist.

Diese Maßnahme hat den Vorteil, dass an den am höchsten belasteten Stellen des Membranbereiches keine Kerbwirkungen auftreten. Es sind daher - bei gleichen Kräfteverhältnissen - größere Auslenkungen bis zur Bruchgrenze des Membranbereiches möglich. Ferner ist von Vorteil, dass in der Ebene des Membranbereiches, also üblicherweise in der sog. X-Y-Ebene des Koordinatenmessgerätes, symmetrische Signalverläufe entstehen. Schließlich erhält man eine größere Empfindlichkeit des Sensorsystems, wenn die Sensorelemente unmittelbar am inneren Rand des Membranbereiches positioniert werden, wo die maximalen Verformungen auftreten.

In an sich bekannter Weise ist ferner bevorzugt, wenn die Mitte verdickt ausgebildet ist. Die verdickte Mitte kann dabei als Pyramidenstumpf ausgebildet sein.

Besonders bevorzugt ist jedoch, wenn die verdickte Mitte als Kegelstumpf ausgebildet ist.

Diese Maßnahme ergänzt sich besonders gut mit der kreisringförmigen Ausbildung des Membranbereiches, um die oben bereits angeführten Vorteile noch vollkommener zu erreichen.

Die Ausführungsbeispiele mit dem kreisringförmigen Membranbereich und der kegelstumpfförmig verdickten Mitte sind auch unabhängig von den anderen Merkmalen der vorliegend beschriebenen Erfindung einsetzbar.

Bei den Ausführungsbeispielen von Tastköpfen der vorstehend erläuterten Art ist schließlich bevorzugt; wenn die bauliche Einheit beim Auswechseln des Taststiftes mittels eines numerisch gesteuerten Roboters handhabbar ist.

Diese Maßnahme hat den Vorteil, dass ein Wechsel des Taststiftes zwischen zwei Einzel-Messaufgaben in extrem kurzer Zeit und mit höchster Reproduzierbarkeit und geringstem Risiko von Beschädigungen des Taststiftes ausgeführt werden kann.

Weitere Vorteile ergeben sich aus der Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: eine Seitenansicht, teilweise geschnitten, durch ein Ausführungsbeispiel eines erfindungsgemäßen Tastkopfes;
- Fig. 2: einen Ausschnitt aus Fig. 1, in vergrößertem Maßstab, zur Erläuterung weiterer Einzelheiten;
- Fig. 3: eine perspektivische Ansicht eines Tastkopfhalters aus dem Tastkopf gemäß den Fig. 1 und 2;
- Fig. 4A und 4B: Seitenansichten, im Schnitt und in vergrößertem Maßstab, eines Sensorsystems des Tastkopfes gemäß den Fig. 1 und 2, in zwei verschiedenen Betriebsstellungen;
- Fig. 4C bis 4E: Draufsichten auf drei Ausführungsbeispiele des Sensorsystems gemäß Fig. 4A, in Richtung der Pfeile IV-IV von Fig. 4A;
- Fig. 5: eine perspektivische Darstellung, in stark vergrößertem Maßstab, eines Federstifthalters des Tastkopfes gemäß den Fig. 1 und 2.

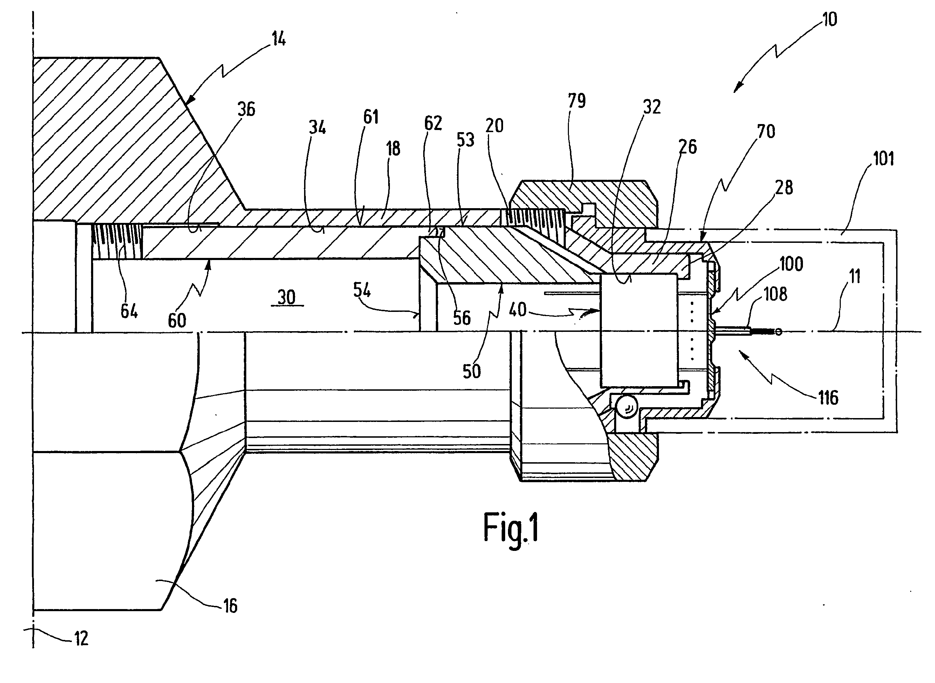

Fig. 1 zeigt mit dem Bezugszeichen 10 insgesamt ein Ausführungsbeispiel eines erfindungsgemäßen Tastkopfes. Der Tastkopf 10 kann beispielsweise am unteren Ende einer Pinole eines Koordinatenmessgerätes in Portalbauweise oder Freiarmbauweise angeordnet sein. Dies ist in Fig. 1 mit dem Bezugszeichen 12 angedeutet. Der Tastkopf 10 erstreckt sich im Wesentlichen entlang einer Achse 11, die in Fig. 1 horizontal dargestellt ist und in der Praxis meist eine Vertikalachse, die sogenannte Z-Achse, ist.

Der Tastkopf 10 weist an seinem in Fig. 1 linken Ende eine Tastkopfaufnahme 14 auf. Die Tastkopfaufnahme 14 verfügt an ihrem in Fig. 1 linken Ende über einen Mehrkantkopf 16. Daran schließt sich nach rechts ein mittlerer Abschnitt 18 an, der in ein Außengewinde 20 ausläuft. Danach folgt ein sich konisch verjüngender Abschnitt 22, dessen konische Außenoberfläche mit 24 bezeichnet ist. Schließlich ist an dem in Fig. 10 rechten Ende der Tastkopfaufnahme 14 ein vorderer Endabschnitt 26 vorgesehen, der sich radial in Form einer inneren Ringschulter 28 verjüngt.

Innen ist die Tastkopfaufnahme 14 entlang der Achse 11 mit einer gestuften Durchgangsöffnung 30 versehen. An dem in Fig. 1 rechten Ende der Tastkopfaufnahme 14 wird die Durchgangsöffnung 30 durch eine erste Innenzylinderfläche 32 gebildet. Im mittleren Abschnitt 18 befindet sich eine zweite Innenzylinderfläche 34 mit etwas größerem Durchmesser, die in Fig. 1 nach links in ein Innengewinde 36 ausläuft.

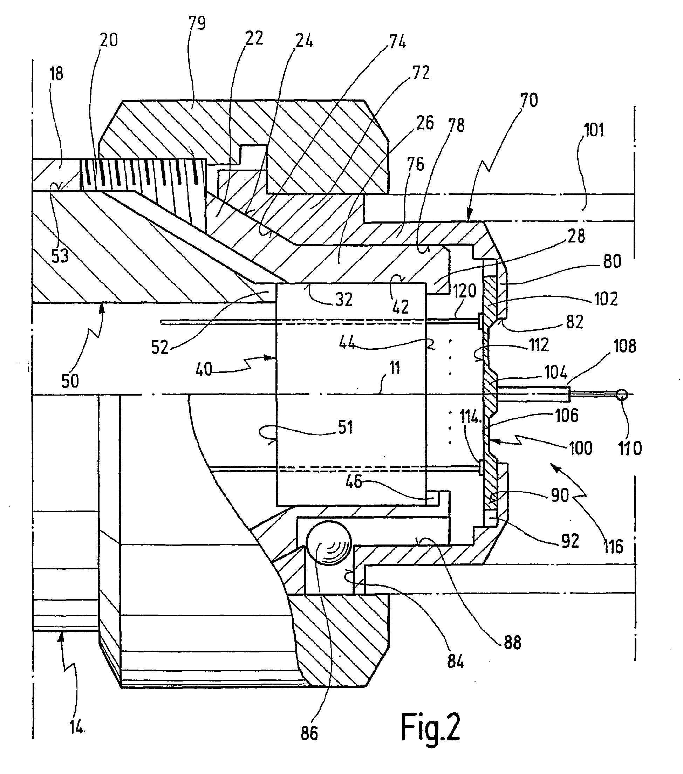

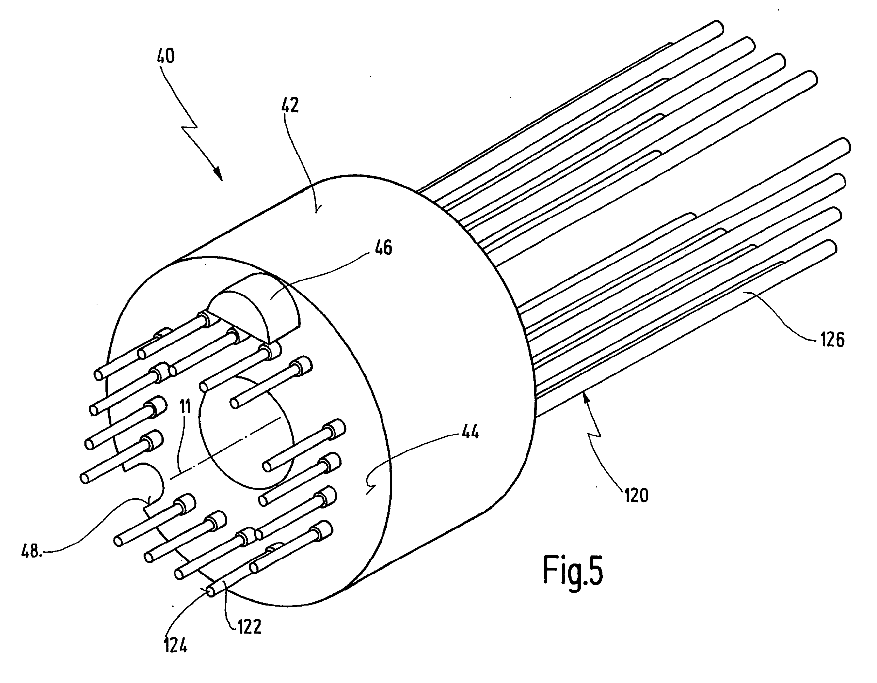

Wie man nun in weiteren Einzelheiten aus Fig. 2 entnehmen kann, ist in die Durchgangsöffnung 30 ein im Wesentlichen zylindrischer Federstifthalter 40 eingesteckt, dessen Außenzylinderfläche 42 an die erste Innenzylinderfläche 32 angepasst ist, so dass der Federstifthalter 40 am vorderen, d.h. in Fig. 1 rechten Ende der Tastkopfaufnahme 13, radial und über seine Vorderseite 44 auch axial an der inneren Ringschulter 28 gehalten ist. Ein Vorsprung 46, der besonders deutlich in Fig. 5 zu erkennen ist, greift in eine entsprechende Aussparung an der inneren Ringschulter 28, so dass der Federstifthalter 40 auch in seiner Drehstellung fixiert ist, wenn der in seiner in Fig. 1 und 2 dargestellten Betriebsstellung sitzt. Alternativ kann hierzu auch eine Ausnehmung 48 am Umfang des Federstifthalters 40 vorgesehen werden, die in Fig. 5 dargestellt ist.

Um den Federstifthalter 40 in der in Fig. 1 und 2 dargestellten Stellung zu fixieren, wird eine Niederhalterhülse 50 verwendet, die in Fig. 1 und 2 in axialer Richtung an eine Rückseite 51 des Federstifthalters 40 anstößt. Hierzu ist die Niederhalterhülse 50 mit einem verjüngten vorderen Ende 52 versehen.

Die Niederhalterhülse 50 läuft mit ihrer Außenzylinderfläche 53 in der zweiten Innenzylinderfläche 34 der Durchgangsöffnung 30. Ein hinteres Ende 54 der Niederhalterhülse 50 ist mit einer Umfangsnut 56 versehen, die in Fig. 1 dargestellt ist.

Zum Fixieren der Niederhalterhülse 50 in der in Fig. 1 und 2 dargestellten Stellung dient eine Niederhaltemutter 60, die mit ihrer Außenzylinderfläche 61 in der zweiten Innenzylinderfläche 34 der Durchgangsöffnung 30 läuft. Die Niederhaltemutter 60 ist auf ihrer Vorderseite mit einem an ihrem Umfang befindlichen ringförmigen Vorsprung 62 versehen, der in die Umfangsnut 56 der Niederhalterhülse 50 greift.

Am rückwärtigen Ende ist die Niederhaltemutter 60 mit einem Außengewinde 64 versehen, das in dem Innengewinde 36 der Tastkopfaufnahme 14 läuft. Mittels geeigneter Umfangsschlitze und dergleichen (nicht dargestellt) kann die Niederhaltemutter 60 folglich in die Durchgangsöffnung 30 eingeschraubt werden, bis sie die Niederhalterhülse 50 gegen den Federstifthalter 40 drückt und dieser axial mit seiner Vorderseite 44 an der inneren Ringschulter 28 fest anliegt.

Auf den vorderen Endabschnitt 26 der Tastkopfaufnahme 14 ist ein auswechselbares, miniaturisiertes Tastsystem in Gestalt eines hülsenförmigen Tastkopfhalters 70 aufschiebbar. Der Tastkopfhalter 70 weist einen hinteren, d.h. in Fig. 1 und 2 linken Abschnitt 72 auf. Dieser ist mit einer konischen Innenoberfläche 74 versehen, die komplementär zur konischen Außenoberfläche 24 am konisch verjüngten Abschnitt 22 der Tastkopfaufnahme 14 ausgebildet ist. Damit wird der Tastkopfhalter 70 auf diesem Abschnitt 22 der Tastkopfaufnahme 14 zentriert.

Ein mittlerer Abschnitt 76 des Tastkopfhalters 70 läuft mit einer Innenzylinderfläche 78 auf dem vorderen Endabschnitt 26 der Tastkopfaufnahme 14.

Wenn der Tastkopfhalter 70 auf das vordere Ende der Tastkopfaufnahme 14 in der beschriebenen Weise aufgeschoben ist, kann er in dieser Position mittels einer Überwurfmutter 79 fixiert werden, die auf das Außengewinde 20 der Tastkopfaufnahme 14 aufschraubbar ist.

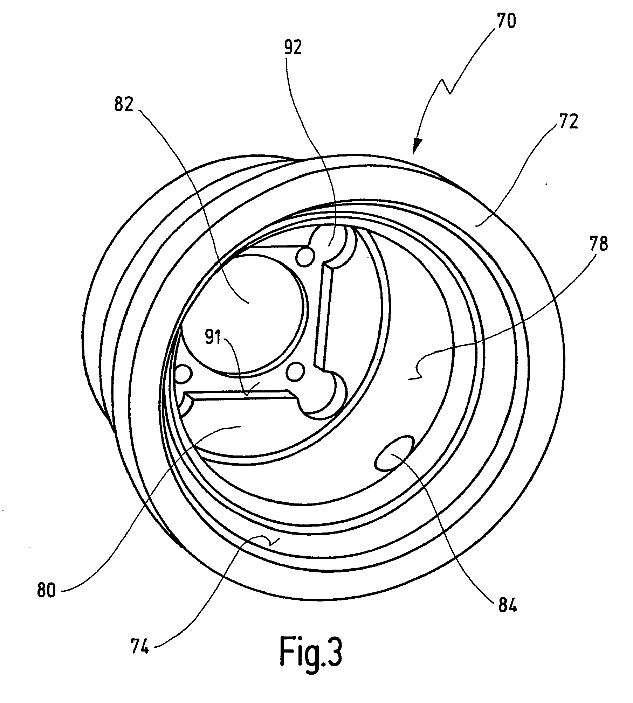

Ein vorderer Abschnitt 80 des Tastkopfhalters 70 erstreckt sich im Wesentlichen in radialer Richtung nach unten und lässt im Bereich der Achse 11 eine zentrale Öffnung 82 frei. Dies und weitere Einzelheiten sind besonders gut aus der perspektivischen Darstellung in Fig. 3 zu erkennen.

An einer Umfangsposition ist der mittlere Abschnitt 76 des Tastkopfhalters 70 mit einer radialen Bohrung 84 versehen, in die eine Kugel 86 eingesetzt und vorzugsweise mittels einer Feder (nicht dargestellt) radial nach innen vorgespannt ist. Die Bohrung 84 geht in eine Axialnut 88 im vorderen Endabschnitt 26 der Tastkopfaufnahme 14 über, die ebenfalls nur an einer Umfangsposition der Tastkopfaufnahme 14 angebracht ist. Wenn daher der Tastkopfhalter 70 in der beschriebenen und in den Fig. 1 und 2 dargestellten Weise auf das vordere Ende der Tastkopfaufnahme 14 aufgeschoben und dann um die Achse 11 verdreht wird, wird zusätzlich eine definierte Drehstellung erreicht, wenn die Kugel 86 aus der Bohrung 84 teilweise in die Axialnut 88 eintritt.

Wie man besonders gut aus der perspektivischen Darstellung in Fig. 3, aber auch aus Fig. 2 erkennt, weist der vordere Abschnitt 80 des Tastkopfhalters 70 eine Rückseite 90 auf, die sich im Wesentlichen in einer Radialebene relativ zur Achse 11 erstreckt. An der Rückseite 90 befindet sich eine Aussparung 91 von beispielsweise quadratischer Gestalt. An den Ecken der Aussparung 91 befinden sich Klebetaschen 92.

Diese Anordnung dient zum Befestigen, d.h. zum Einkleben eines Sensorsystems 100. Das Sensorsystem 100 wird bei der Montage in die Aussparung 91 eingesetzt und dann durch Einfüllen von Klebstoff in die Klebetaschen 92 und durch anschließendes Aushärten des Klebstoffes auf der Rückseite 90 fixiert.

Das auf diese Weise fixierte Sensorsystem 100 ist mechanisch äußerst empfindlich, so dass eine Schutzkappe 101 auf den mittleren Abschnitt 76 des Tastkopfhalters 70 aufgesteckt werden kann, um eine Beschädigung des Sensorsystems 100 zu verhindern, wenn dieses nicht in Betrieb ist.

Das Sensorsystem 100, das an sich aus der eingangs gewürdigten DE 101 08 774 A1 bekannt ist, hat entweder die sich aus Fig. 3 ergebende quadratische Draufsichtsform oder eine Kreisform.

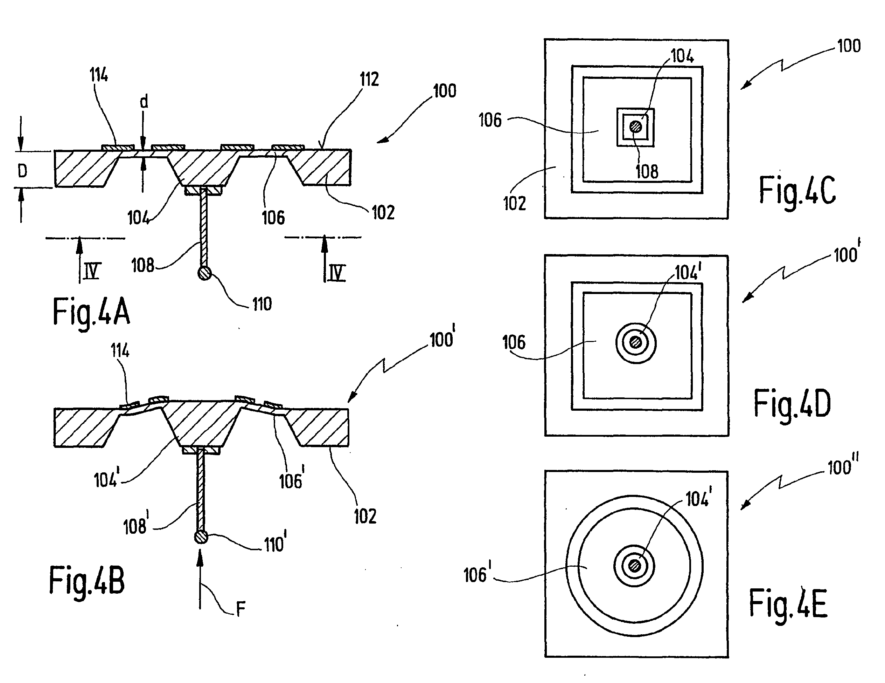

Wie man aus den Fig. 4A und 4B in weiteren Einzelheiten entnehmen kann, verfügt das Sensorsystem 100 über einen verdickten Rand 102 und eine erhabene Mitte 104, den sogenannten "boss", wobei sich zwischen Rand 102 und Mitte 104 ein Membranbereich 106 befindet. Die Dicke des Randes 102 ist in Fig. 4A mit D und die Dicke des Membranbereichs 106 mit d bezeichnet. Das Sensorsystem 100 ist vorzugsweise auf Siliciumbasis aufgebaut und kann beispielsweise eine Kantenlänge von etwa 6 mm aufweisen. Bei diesem Ausführungsbeispiel beträgt die Dicke D z.B. 0,5 mm und die Dicke d etwa 30 *µ*m.

Von der Mitte 104 erstreckt sich in Richtung der Achse 11 ein Taststift 108, an dessen freiem Ende sich eine Kugel 110 befindet. In dem genannten Ausführungsbeispiel kann der Taststift 108 eine Länge von 8 mm und einen Durchmesser von 0,2 mm aufweisen, während die Tastkugel 110 einen Durchmesser von 0,3 mm haben kann.

An einer Rückseite 112 des Sensorsystems 100 sind Sensorelemente 114 vorgesehen. Die Sensorelemente 114 arbeiten auf elektrischem Wege. Sie können z.B. als Dehnungsmessstreifen oder als piezoelektrische Elemente ausgebildet sein. Das Sensorsystem 100 mit dem Taststift 108 und den Sensorelementen 114 bildet insgesamt eine bauliche Einheit 116, die in der beschriebenen Weise an der Rückseite 90 des vorderen Abschnitts 80 des Tastkopfhalters 70 eingeklebt, d.h. vormontiert, wird.

Fig. 4C zeigt eine erste Ausführungsform eines erfindungsgemäßen Sensorsystems 100. Bei diesem ist der Membranbereich 106 in einer an sich aus der DE 101 08 774 A1 bekannten Weise in der Draufsicht rechteckig-, vorzugsweise quadratisch-rahmenförmig und die erhabene Mitte 104 als vierseitiger Pyramidenstumpf im Zentrum des Membranbereiches 106 mit ebenfalls quadratischer Grundfläche ausgebildet. Der Membranbereich 106 hat beispielsweise eine äußere Kantenlänge von 3 mm und der Pyramidenstumpf eine untere Kantenlänge von 1,6 mm.

Bei einer zweiten Ausführungsform gemäß Fig. 4D ist der Membranbereich 106 eines Sensorsystems 100' ebenfalls quadratisch, die erhabene Mitte 104' jedoch kegelstumpfförmig ausgebildet. Der untere Durchmesser des Kegelstumpfes beträgt beispielsweise 1,6 mm.

Bei einer dritten Ausführungsform ist der Membranbereich 106' eines Sensorsystems 100" in der Draufsicht kreisförmig und die erhabene Mitte 104' wiederum kegelstumpfförmig ausgebildet. Der Kreisring hat beispielsweise einen Außendurchmesser von 3 mm.

Bei der zweiten und der dritten Ausführungsform befindet sich innerhalb des Membranbereiches 106 bzw. 106' der Ort maximaler Verformung am inneren Rand. Es ist daher in diesen Fällen bevorzugt, die Sensorelemente 114 dort anzubringen.

Die zweite und die dritte Ausführungsform sind auch unabhängig von den anderen Merkmalen der vorliegend beschriebenen Erfindung einsetzbar.

Der elektrische Kontakt zu den Sensorelementen 114 wird mit einer Mehrzahl von Federstiften 120 hergestellt. Bei dem in Fig. 5 dargestellten Ausführungsbeispiel sind vier Gruppen von je vier Federstiften jeweils um 90° zueinander versetzt und um die Achse 11 verteilt vorgesehen. Die Federstifte 120 weisen jeweils einen vorderen Abschnitt 122 auf, der mit einer vorderen Spitze 124 an ein zugehöriges Kontaktplättchen (nicht dargestellt) eines Sensorelementes 114 anlegbar ist. Die vorderen Abschnitte 122 der Federstifte 120 sind axial federnd in hinteren Abschnitten 126 der Federstifte 120 gelagert.

Um zwischen zwei Messvorgängen den Taststift 108 auszuwechseln, geht man bei dem vorstehend beschriebenen Tastkopf 10 wie folgt vor:

Zunächst wird die Überwurfmutter 79 vom Außengewinde 20 abgeschraubt. Als nächstes wird der Tastkopfhalter 70 mit oder ohne die aufgesetzte Schutzkappe 101 in Richtung der Achse 11 vom vorderen Ende der Tastkopfaufnahme 14 abgezogen. Dabei löst sich das Sensorsystem 100 selbsttätig von den Federstiften 120, die bei diesem Abziehen von den jeweils zugehörigen Kontaktplättchen der Sensorelemente 114 abheben.

Als nächstes muss nun ein neuer Tastkopfhalter 70 mit dem gewünschten anderen Taststift 108 in axialer Richtung auf das vordere Ende der Tastkopfaufnahme 14 aufgeschoben werden, wobei durch eine Verdrehung in Umfangsrichtung sichergestellt wird, dass die Kugel 86 in die in Fig. 2 dargestellte Stellung gelangt, in der die vorbestimmte Drehstellung erreicht ist. Der Tastkopfhalter 70 muss nun nur noch durch Aufschrauben der Überwurfmutter 79 auf das Außengewinde 20 in axialer Richtung fixiert werden. Durch die konische Passung 24/74 wird der Tastkopfhalter 70 dabei relativ zur Achse 11 automatisch zentriert.

Die vorstehend genannten Montagevorgänge lassen sich in einfacher Weise automatisieren, insbesondere unter Zuhilfenahme eines NC-gesteuerten Roboters, insbesondere des Koordinatenmessgerätes selbst.

## Patentansprüche

1. Tastkopf für ein Koordinatenmessgerät, mit einem Tastsystem, das ein membranartiges Sensorsystem (100) mit Sensorelementen (114) sowie einen Taststift (108) aufweist, der an dem Sensorsystem (100) angeordnet ist, wobei das membranartige Sensorsystem (100) auf Siliziumbasis aufgebaut ist und in einer vorbestimmten Weise ausgelenkt wird, wenn auf den Taststift (108) eine Kraft (F) einwirkt, wobei die Sensorelemente (114) dazu ausgebildet sind, eine Auslenkung des Sensorsystems (100) zu erfassen, und wobei der Taststift (108) und das membranartige Sensorsystem (100) mit den Sensorelementen (114) eine bauliche Einheit (116) bilden, **gekennzeichnet durch** einen Tastkopfhalter (70), mit dem die bauliche Einheit (116) fest verbunden ist, wobei der Tastkopfhalter (70) auswechselbar mit einer Tastkopfaufnahme (14) des Koordinatenmessgerätes verbindbar ist, um die bauliche Einheit (116) auswechselbar an der Tastkopfaufnahme (14) zu befestigen.

2. Tastkopf nach Anspruch 1, **dadurch gekennzeichnet, dass** der Tastkopfhalter (70) hülsenartig ausgebildet ist.

3. Tastkopf nach Anspruch 1 oder 2, **gekennzeichnet durch** Mittel (40) zum elektrischen Anschließen der Sensorelemente (114), wobei die Mittel (40) baulich getrennt von der mechanischen Befestigung der baulichen Einheit (116) an der Tastkopfaufnahme (14) sind.

4. Tastkopf nach Anspruch 3, **dadurch gekennzeichnet, dass** die Mittel (40) Federstifte (120) zum Kontaktieren der Sensorelemente (114) beinhalten.

5. Tastkopf nach Anspruch 4, **dadurch gekennzeichnet, dass** die Sensorelemente (114) auf einer vom Taststift (108) abgewandten Rückseite (112) des Sensorsystems (100) kontaktierbar sind.

6. Tastkopf nach einem der Ansprüche 1 bis 5, **dadurch gekennzeichnet, dass** der Tastkopfhalter (70) einen hinteren Abschnitt (72) aufweist, der über eine konische Passung (24/74) mit der Tastkopfaufnahme (14) verbindbar ist.

7. Tastkopf nach einem oder mehreren der Ansprüche 1 bis 6, **dadurch gekennzeichnet, dass** das Sensorsystem (100) an einem vorderen Abschnitt (80) des Tastkopfhalters (70) befestigt ist.

8. Tastkopf nach einem der Ansprüche 1 bis 7, **dadurch gekennzeichnet, dass** das Sensorsystem (100) an einer radialen Rückseite (90) des Tastkopfhalters (70) befestigt ist.

9. Tastkopf nach einem der Ansprüche 1 bis 8, **dadurch gekennzeichnet, dass** das Sensorsystem (100) mit dem Tastkopfhalter (70) verklebt ist, und zwar insbesondere mit der Rückseite (90).

10. Tastkopf nach einem der Ansprüche 8 oder 9, **dadurch gekennzeichnet, dass** der Taststift (108) durch eine zentrale Öffnung in der Rückseite (90) des Tastkopfhalters (70) ragt.

11. Tastkopf nach einem der Ansprüche 1 bis 10, **dadurch gekennzeichnet, dass** das Sensorsystem (100) einen verdickten Rand (102) aufweist, dass der Taststift (108) in einer Mitte (104) des Sensorsystems (100) angeordnet ist, und dass sich zwischen dem Rand (102) und der Mitte (104) ein Membranbereich (106) befindet.

## Claims

1. A probe head for a coordinate measuring machine, having a feeler system that comprises a membrane-type sensor system (100) with sensor elements (114) and comprises a stylus (108) that is arranged on the sensor system (100), wherein the membrane-type sensor system (100) is of silicon-based construction and is deflected in a predetermined way when a force (F) acts on the stylus (108), wherein the sensor elements (114) are configured for detecting a deflection of the sensor system (100), and wherein the stylus (108) and the membrane-type sensor system (100) with the sensor elements (114) form a structural unit (116), **characterized by** a probe holder (70) to which the structural unit (116) is permanently connected, wherein the probe holder (70) is capable of being replaceably connected to a probe receptacle (14) of the coordinate measuring machine in order to replaceably mount the structural unit (116) on the probe receptacle (14).

2. The probe head of claim 1, **characterized in that** the probe holder (70) is constructed like a sleeve.

3. The probe head of claim 1 or 2, **characterized by** means (40) for electrically connecting the sensor elements (114), the means (40) being structurally separate from the mechanical fastening of the structural unit (116) on the probe receptacle (14).

4. The probe head of claim 3, **characterized in that** the means (40) include spring pins (120) for making a contact with the sensor elements (114).

5. The probe head of claim 4, **characterized in that** the sensor elements (114) are configured to be contacted on a rear side (112) facing away from the stylus (108) of the sensor system (100).

6. The probe head of one of claims 1 to 5, **characterized in that** the probe holder (70) has a rear section (72) that configured to be connected to the probe receptacle (14) via a conical fit (24/74).

7. The probe head of one or more of claims 1 to 6, **characterized in that** the sensor system (100) is mounted on a front section (80) of the probe holder (70).

8. The probe head of one of claims 1 to 7, **characterized in that** the sensor system (100) is mounted on a radial rear side (90) of the probe holder (70).

9. The probe head of one of claims 1 to 8, **characterized in that** the sensor system (100) is adhered to the probe holder (70), specifically with the rear side (90).

10. The probe head of either claim 8 or 9, **characterized in that** the stylus (108) projects through a central opening in the rear side (90) of the probe holder (70).

11. The probe head of one of claims 1 to 10, **characterized in that** the sensor system (100) has a thickened edge (102), **in that** the stylus (108) is arranged in the middle (104) of the sensor system (100), and **in that** a membrane area (106) is located between the edge (102) and the middle (104).

## Revendications

1. Tête palpeuse pour un appareil de mesure de coordonnées, avec un système palpeur, qui présente un système capteur (100) de type membrane, avec des éléments en détection (114) et un palpeur (108), qui est disposé sur le système capteur (100), le système capteur (100) de type membrane étant conçu à base de silicium et étant dévié d'une façon prédéfinie lorsqu'une force (F) agit sur le palpeur (108), les éléments de détection (114) étant conçus pour enregistrer une déviation du système capteur (100), et le palpeur (108) et le système capteur (100) du type membrane formant avec les éléments de détection (114) une unité (116) de construction, **caractérisée par** un support de tête palpeuse (70), avec laquelle l'unité (116) de construction est reliée de façon fixe, le support de tête palpeuse (70) pouvant être relié de façon amovible à un logement de tête palpeuse (14) de l'appareil de mesure de coordonnées, afin de fixer l'unité (116) de construction de façon amovible sur le logement de tête palpeuse (14).

2. Tête palpeuse selon la revendication 1, **caractérisée en ce que** le support de tête palpeuse (70) est conçu à la manière d'une douille.

3. Tête palpeuse selon la revendication 1 ou 2, **caractérisée par** des moyens (40) pour le raccordement électrique des éléments de détection (114), les moyens (40) étant séparés au niveau de la construction de la fixation mécanique de l'unité (116) de construction sur le logement de tête palpeuse (14).

4. Tête palpeuse selon la revendication 3, **caractérisée en ce que** les moyens (40) comprennent des goupilles à ressort (120) pour l'établissement du contact avec les éléments de détection (114).

5. Tête palpeuse selon la revendication 4, **caractérisée en ce que** les éléments de détection (114) peuvent établir un contact sur un côté arrière (112), opposé au palpeur (108) du système capteur (100).

6. Tête palpeuse selon l'une quelconque des revendications 1 à 5, **caractérisée en ce que** le support de tête palpeuse (70) présente une partie arrière (72) qui peut être reliée au logement de tête palpeuse (14) au moyen d'un ajustement (24/74) conique.

7. Tête palpeuse selon l'une quelconque ou plusieurs des revendications 1 à 6, **caractérisée en ce que** le système capteur (100) est fixé sur une partie (80) avant du support de tête palpeuse (70)

8. Tête palpeuse selon l'une quelconque de revendication 1 à 7, **caractérisée en ce que** le système capteur (100) est fixé sur un côté arrière (90) radial du support de tête palpeuse (70)

9. Tête palpeuse selon l'une quelconque de revendication 1 à 8, **caractérisée en ce que** le système capteur (100) est collé avec le support de tête palpeuse (70), et ce en particulier avec le côté arrière (90).

10. Tête palpeuse selon l'une quelconque des revendications 8 ou 9, **caractérisé en ce que** le palpeur (108) dépasse par un orifice central dans le côté arrière (90) du support de tête palpeuse (70).

11. Tête palpeuse selon l'une quelconque des revendications 1 à 10, **caractérisée en ce que** le système capteur (100) présente un bord épaissi (102), **en ce que** le palpeur (108) est disposé dans un centre (104) du système capteur, et **en ce qu'**une zone de membrane (106) se trouve entre le bord (102) et le centre (104).
